(19) Europäisches Patentamt
European Patent Office
Office européen des brevets

(11) **EP 3 525 380 B1**

(12) **EUROPEAN PATENT SPECIFICATION**

(45) Date of publication and mention
of the grant of the patent:
**26.08.2020 Bulletin 2020/35**

(51) Int Cl.:
**H04L 5/00** *(2006.01)*   **H04B 7/04** *(2017.01)*
**H04B 7/06** *(2006.01)*

(21) Application number: **17868265.4**

(22) Date of filing: **06.01.2017**

(86) International application number:
**PCT/CN2017/070387**

(87) International publication number:
**WO 2018/082209 (11.05.2018 Gazette 2018/19)**

(54) **METHOD FOR SWITCHING STATES, NETWORK DEVICE, AND TERMINAL DEVICE**

VERFAHREN ZUM UMSCHALTEN VON ZUSTÄNDEN, NETZWERKVORRICHTUNG UND ENDGERÄTEVORRICHTUNG

PROCÉDÉ DE COMMUTATION D'ÉTATS, DISPOSITIF DE RÉSEAU, ET DISPOSITIF TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.11.2016 CN 201610959056**

(43) Date of publication of application:
**14.08.2019 Bulletin 2019/33**

(73) Proprietor: **Huawei Technologies Co., Ltd.**
**Longgang District**
**Shenzhen, Guangdong 518129 (CN)**

(72) Inventors:
• **SUN, Yanliang**
  **Shenzhen**
  **Guangdong 518129 (CN)**
• **XU, Kai**
  **Shenzhen**
  **Guangdong 518129 (CN)**
• **LIU, Bin**
  **Shenzhen**
  **Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(56) References cited:
**WO-A1-2013/023290**   **WO-A1-2015/030523**
**WO-A2-2011/129584**   **CN-A- 104 012 024**
**US-A1- 2011 081 871**   **US-A1- 2016 261 328**

• **CONVIDA WIRELESS: "Discussion on Dynamic Switching of Transmission Modes", 3GPP DRAFT; R1-1610380_DYNAMIC TM SWITCHING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150391, Retrieved from the Internet: URL:http://www.3gpp.org/ftp/Meetings_3GPP_ SYNC/RAN1/Docs/ [retrieved on 2016-10-09]**
• **NOKIA ET AL: "Unified MIMO transmission mode for 5G new radio interface", 3GPP DRAFT; R1-167285, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 12 August 2016 (2016-08-12), XP051132605, Retrieved from the Internet: URL:http://www.3gpp.org/ftp/tsg_ran/WG1_RL 1/TSGR1_86/Docs/ [retrieved on 2016-08-12]**

**EP 3 525 380 B1**

**Description**

**TECHNICAL FIELD**

Embodiments of the present invention relate to the communications field, and more specifically, to a status switching method, network device, and terminal device.

**BACKGROUND**

A multiple input multiple output (MIMO) technology means that a transmit end and a receive end respectively use a plurality of transmit antennas and a plurality of receive antennas to transmit and receive signals, so as to improve communication quality. The MIMO technology may be classified into two types: space diversity and spatial multiplexing. A space diversity technology means that signals with same information are sent through different paths by using the plurality of transmit antennas, and a receiver obtains a plurality of independent fading signals of a same data symbol, so as to improve receiving reliability. A spatial multiplexing technology means that to-be-transmitted data may be divided into several data streams and then transmitted on different antennas, and the receiver can distinguish signals transmitted on different transmit antennas without using an extra frequency or time resource, so as to improve a system transmission rate.

The spatial multiplexing technology includes open-loop spatial multiplexing and closed-loop spatial multiplexing. A main difference between the closed-loop spatial multiplexing and the open-loop spatial multiplexing is that the closed-loop spatial multiplexing requires a terminal device to feed back precoding matrix sequence number (PMI) information, and content of the PMI information is an appropriate W matrix selected by a terminal from a given precoding matrix set. A base station selects an appropriate precoding matrix W (which may be different from that fed back by the terminal) based on the PMI information fed back by the terminal. In this way, accuracy of precoding can be improved, and a particular gain is brought. However, when the terminal moves at a relatively high speed, a feedback delay may cause feedback information to be relatively lagging, affecting network performance.

Prior art document R1-1610380, CONVIDA WIRELESS, 3GPP DRAFT, refers to a discussion on dynamic switching of transmission modes.

Further, WO 2013/023290 A1 refers to an apparatus and method for feedback solutions that function in conjunction with CoMP transmissions. The feedback solutions are applicable to joint transmission (JT) as well as coordinated scheduling (CS) and coordinated beamforming (CB).

Further, US 2016/0261328 A1 refers to a method of reporting channel state information to a base station at a user equipment (UE) in a wireless communication system. The method includes configuring a two-dimensional (2D) antenna array transmission mode of a downlink data channel via a higher layer, receiving an indicator corresponding to one of transmission schemes of the downlink data channel via the higher layer, calculating the channel state information on the assumption of one transmission scheme of the downlink data channel corresponding to the indicator, and reporting the calculated channel state information to the base station. The transmission schemes of the downlink data channel include a demodulation-reference signal (DM-RS) based large delay (LD) cyclic delay diversity (CDD) transmission scheme and a closed loop multiplexing transmission scheme in the 2D antenna array transmission mode.

Therefore, when a scenario of data transmission changes, the terminal needs to perform open-loop/closed-loop switching.

In an existing LTE system, for the open-loop spatial multiplexing based on a reference signal, a transmission mode of the open-loop spatial multiplexing is first defined, and the transmission mode is configured by using radio resource control (RRC) signaling. Specifically, after configuring the transmission mode, the terminal is in an open-loop spatial multiplexing state, and reports channel state information (CSI) accordingly. The base station determines actually transmitted parameter information based on the CSI reported by the terminal.

However, in the foregoing transmission mode, when the terminal needs to perform open-loop/closed-loop switching, the base station needs to perform RRC signaling reconfiguration. In particular, when a terminal speed changes relatively frequently, a relatively long delay is caused.

**SUMMARY**

Embodiments of the present invention provide a status switching method, and a network device, to effectively reduce a delay. This problem is solved by the subject matter of the independent claims. Further implementation forms are provided in the dependent claims.

The embodiments that do not fall under the scope of the claims have to be interpreted as examples useful for understanding the invention.

According to a first aspect, a status switching method is provided, including:

determining, by a network device, whether a terminal device is in a first state, where the first state is used to: when the terminal device is in the first state, send channel state indication CSI information to the network device, and the CSI information includes first CSI information in a closed-loop state and second CSI information in an open-loop state;

when the terminal device is in the first state, receiving, by the network device, the CSI information sent by the terminal device;

determining, by the network device, first indication information based on the CSI information, where the first indication information is used to indicate a transmission parameter of downlink data; and

sending, by the network device, the first indication information to the terminal device.

For inter-cell interference that may be caused by open-loop precoding of beamforming, the status switching method in this embodiment of the present invention can quickly switch an open-loop/closed-loop state, to reduce unnecessary open-loop spatial multiplexing transmission, effectively reduce the inter-cell interference, and reduce a network delay.

In some possible designs, if the terminal device is not in the first state, before the sending, by the network device, the first indication information to the terminal device, the method further includes:

sending, by the network device, a radio resource management RRC message to the terminal device, where the RRC message is used to instruct the terminal device to enter the first state.

In this embodiment of the present invention, the network device indicates the transmission parameter of the downlink data by using the first indication information, to avoid higher layer signaling overheads caused by frequent RRC reconfiguration, and reduce a network delay.

In some possible designs, the first state is the open-loop state, and if the terminal device is not in the first state, before the sending, by the network device, the first indication information to the terminal device, the method further includes:

sending, by the network device, a Media Access Control MAC control information element to the terminal device, where the MAC control information element is used to instruct the terminal device to enter the open-loop state.

Further, in some possible designs, the first CSI information includes precoding matrix indicator PMI information and first channel quality indicator CQI information in the closed-loop state, and the second CSI information includes second CQI information in the open-loop state.

The determining, by the network device, first indication information based on the CSI information includes:

determining, by the network device, the first indication information based on the PMI information; and/or

determining, by the network device, the first indication information based on the first CQI information and the second CQI information.

Further, in some possible designs, the sending, by the network device, the first indication information to the terminal device includes:

sending, by the network device, first downlink control information DCI to the terminal device, where the first DCI includes the first indication information.

In this embodiment of the present invention, the network device sends, through a downlink control channel, the first indication information used to indicate the transmission parameter of the downlink data, to reserve signaling space for a definition of subsequent higher order open-loop precoding and achieve forward compatibility.

Further, in some possible designs, before the receiving, by the network device, the CSI information sent by the terminal device, the method further includes:

sending, by the network device, second indication information to the terminal device, where the second indication information is used to instruct the terminal device to send the first CSI information or the second CSI information at a first moment.

Further, in some possible designs, before the receiving, by the network device, the CSI information sent by the terminal device, the method further includes:

receiving, by the network device, third indication information sent by the terminal device, where the third indication information is used to indicate to the network device that the CSI information sent at a first moment is the first CSI information or the second CSI information.

Further, in some possible designs, the sending, by the network device, second indication information to the terminal device includes:

sending, by the network device, a second DCI message to the terminal device, where the second DCI message includes the second indication information.

According to a second aspect, a status switching method is provided, where the method includes:

receiving, by a terminal device, first indication information sent by a network device, where the first indication information is used to indicate a transmission parameter of downlink data; and
receiving, by the terminal device based on the first indication information, the downlink data sent by the network device.

In this embodiment of the present invention, the network device indicates the transmission parameter of the downlink data by using the first indication information, to avoid higher layer signaling overheads caused by frequent RRC reconfiguration, and reduce a network delay.

In addition, for inter-cell interference that may be caused by open-loop precoding of beamforming, the status switching method in this embodiment of the present invention can quickly switch an open-loop/closed-loop state, to reduce unnecessary open-loop spatial multiplexing transmission and effectively reduce the inter-cell interference.

In some possible designs, before the receiving, by a terminal device, first indication information sent by a network device, the method further includes:

receiving, by the terminal device, a radio resource management RRC message sent by the network device, where the RRC message is used to instruct the terminal device to enter a first state,
the first state is used to instruct the terminal device to send channel state indication CSI information to the network device, and the CSI information includes first CSI information in a closed-loop state and second CSI information in an open-loop state.

In some possible designs, before the receiving, by a terminal device, first indication information sent by a network device, the method further includes:
receiving, by the terminal device, a Media Access Control MAC control information element sent by the network device, where the MAC control information element is used to indicate that the network device enters the open-loop state.

Further, in some possible designs, the receiving, by a terminal device, first indication information sent by a network device includes:
receiving, by the terminal device, first downlink control information DCI sent by the network device, where the first DCI includes the first indication information.

The terminal device receives, through a downlink control channel, the first indication information used to indicate the transmission parameter of the downlink data, to reserve signaling space for a definition of subsequent higher order open-loop precoding and achieve forward compatibility.

Further, in some possible designs, before the receiving, by a terminal device, first indication information sent by a network device, the method includes:

sending, by the terminal device, the first CSI information and the second CSI information to the network device, where the first CSI information includes precoding matrix indicator PMI information and first channel quality indicator CQI information in the closed-loop state, and the second CSI information includes second CQI information in the open-loop state.

Further, in some possible designs, before the sending, by the terminal device, the first CSI information and the second CSI information to the network device, the method further includes:
receiving, by the terminal device, second indication information sent by the network device, where the second indication information is used to instruct the terminal device to send the first CSI information or the second CSI information at a first moment.

Further, in some possible designs, before the sending, by the terminal device, the first CSI information and the second CSI information to the network device, the method further includes:
sending, by the terminal device, third indication information to the network device, where the third indication information is used to indicate to the network device that the CSI information sent at a first moment is the first CSI information or the second CSI information.

Further, in some possible designs, the receiving, by the terminal device, second indication information sent by the network device includes:
receiving, by the terminal device, a second DCI message sent by the network device, where the second DCI message includes the second indication information.

According to a third aspect, a network device is provided, where the network device includes:

a processing unit, configured to determine whether a terminal device is in a first state, where the first state is used to: when the terminal device is in the first state, send channel state indication CSI information to the network device, and the CSI information includes first CSI information in a closed-loop state and second CSI information in an open-loop state; and

a transceiver unit, configured to: when the terminal device is in the first state, receive the CSI information sent by the terminal device, where

the processing unit is further configured to determine first indication information based on the CSI information, where the first indication information is used to indicate a transmission parameter of downlink data; and

the transceiver unit is further configured to send the first indication information to the terminal device.

The network device in the third aspect can implement a status switching method performed by a network device in the method of the first aspect.

According to a fourth aspect, a terminal device is provided, where the terminal device includes:

a transceiver unit, configured to receive first indication information sent by a network device, where the first indication information is used to indicate a transmission parameter of downlink data; and

a processing unit, configured to receive, based on the first indication information, the downlink data sent by the network device.

The terminal device in the fourth aspect can implement a status switching method performed by a terminal device in the method of the second aspect.

According to a fifth aspect, a network device is provided, where the network device includes:

a processor, configured to determine whether a terminal device is in a first state, where the first state is used to: when the terminal device is in the first state, send channel state indication CSI information to the network device, and the CSI information includes first CSI information in a closed-loop state and second CSI information in an open-loop state; and

a transceiver, configured to: when the terminal device is in the first state, receive the CSI information sent by the terminal device, where

the processor is further configured to determine first indication information based on the CSI information, where the first indication information is used to indicate a transmission parameter of downlink data; and

the transceiver is further configured to send the first indication information to the terminal device.

The network device in the fifth aspect can implement a status switching method performed by a network device in the method of the first aspect.

According to a sixth aspect, a terminal device is provided, where the terminal device includes:

a transceiver, configured to receive first indication information sent by a network device, where the first indication information is used to indicate a transmission parameter of downlink data; and

a processor, configured to receive, based on the first indication information, the downlink data sent by the network device.

The terminal device in the sixth aspect can implement a status switching method performed by a terminal device in the method of the second aspect.

With reference to the foregoing aspects, in some possible designs, the PMI information includes a first precoding matrix sequence number corresponding to a wideband, or the PMI information includes the first precoding matrix sequence number and a second precoding matrix sequence number corresponding to a sub-band in the wideband.

With reference to the foregoing aspects, in some possible designs, the transmission parameter includes at least one of a scrambling code sequence number, an antenna port, and a quantity of transport layers.

With reference to the foregoing aspects, in some possible designs, the first indication information is used to indicate that the terminal device is in any one of the following states:

a rank 1 open-loop transmission state based on space frequency block coding SFBC;
a rank 2 open-loop transmission state based on phase encoding; and
a closed-loop transmission state from a rank 1 to a rank N, where N is a maximum quantity of transport layers.

## BRIEF DESCRIPTION OF DRAWINGS

FIG. 1 is a schematic flowchart of an open-loop transmission method in the prior art;
FIG. 2 is a schematic flowchart of a status switching method according to an embodiment of the present invention;

FIG. 3 is another schematic flowchart of a status switching method according to an embodiment of the present invention;

FIG. 4 is a schematic block diagram of periodic CSI according to an embodiment of the present invention;

FIG. 5 is still another schematic flowchart of a status switching method according to an embodiment of the present invention;

FIG. 6 is a schematic block diagram of a status switching network device according to an embodiment of the present invention;

FIG. 7 is another schematic block diagram of a status switching network device according to an embodiment of the present invention;

FIG. 8 is a schematic block diagram of a status switching terminal device according to an embodiment of the present invention; and

FIG. 9 is another schematic block diagram of a status switching terminal device according to an embodiment of the present invention.

## DESCRIPTION OF EMBODIMENTS

The following describes technical solutions in embodiments of the present invention with reference to accompanying drawings.

It should be understood that the technical solutions in the embodiments of the present invention may be applied to various communications systems. It should be further understood that the technical solutions are described based on a network device and a terminal device in the embodiments of the present invention. However, a specific form is not limited in the embodiments of the present invention. For example, the terminal device may be a device that communicates with one or more core networks through a radio access network (RAN). For another example, the network device may be a device used to communicate with the terminal device, or the like.

In the 3rd Generation Partnership Project (3GPP) RANI#86bis conference, major companies discussed and determined, in a beamforming-based open-loop transmission mode, a specific form of open-loop precoding performed between a reference signal and a data channel.

The beamforming mainly depends on strong correlation between channels and an interference principle of an electromagnetic wave, and a transmit waveform with a specific radiation direction is implemented by controlling an amplitude and a phase of a transmit signal. This helps improve a coverage area and a signal-to-noise ratio of a specific user, and may also reduce interference to another user.

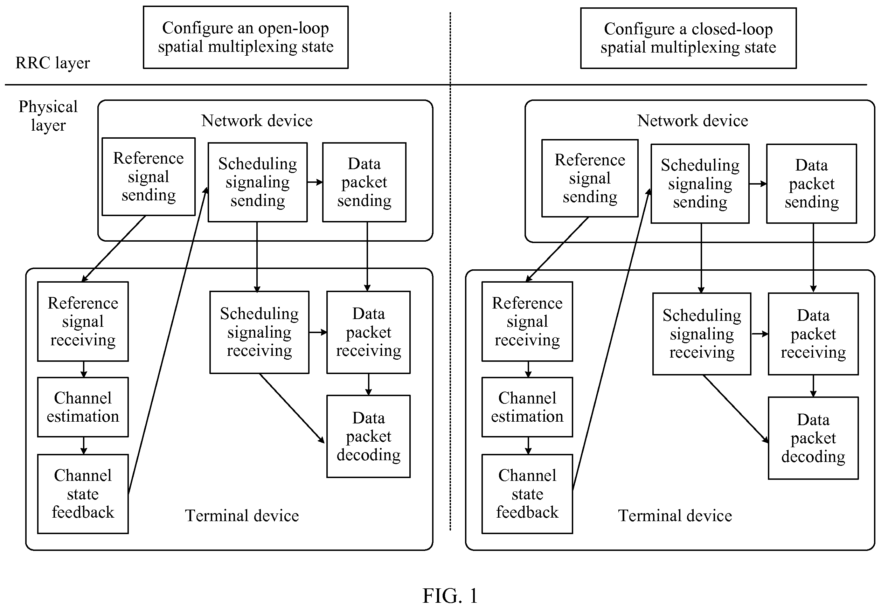

FIG. 1 is a schematic flowchart of an open-loop transmission method in the prior art.

As shown in FIG. 1, in an existing LTE system, for an open-loop spatial multiplexing transmission method based on a cell-level reference signal, a transmission mode indicating open-loop spatial multiplexing is first defined, and the transmission mode is configured by using RRC.

Specifically, after configuring the transmission mode, a terminal device is in an open-loop spatial multiplexing state. Accordingly, the terminal device performs channel estimation based on a demodulation reference signal (DMRS) sent by a network device, determines CSI information, and feeds back the CSI information to the network device.

The network device determines scheduling signaling based on the CSI information reported by the terminal device, and sends the scheduling signaling to the terminal device, so that the terminal device receives downlink data based on the scheduling signaling.

If the terminal device needs to exit from an open-loop spatial multiplexing mode, the network device needs to perform RRC reconfiguration. From a perspective of a physical layer, the open-loop spatial multiplexing state and a closed-loop spatial multiplexing state are isolated from each other.

It should be noted that the reference signal in the foregoing procedure is a reference signal obtained after beamforming. In a closed-loop transmission mode, a beamforming vector of the reference signal is entirely consistent with a beamforming vector of a data channel. However, in open-loop transmission, a beamforming vector of the reference signal is not consistent with a beamforming vector of a data channel.

In other words, a difference between open-loop beamforming based on the reference signal and closed-loop beamforming based on the reference signal only lies in whether to perform open-loop precoding between the reference signal and the data channel.

To be specific, when a terminal needs to perform open-loop/closed-loop switching, only one set of signaling needs to be designed to indicate whether the terminal device is in an open-loop transmission state or a closed-loop transmission state.

In the status switching method in this embodiment of the present invention, the network device sends, to the terminal device, a transmission parameter used to instruct the terminal device to receive the downlink data, to quickly switch a transmission status of the terminal device and effectively reduce signaling overheads and a delay.

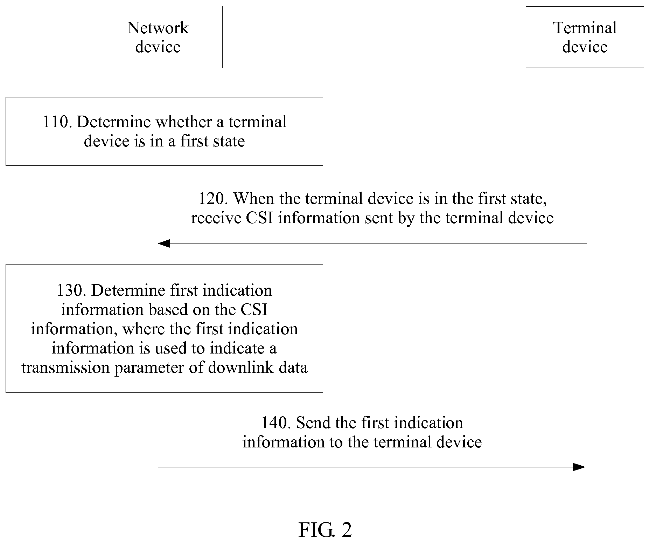

FIG. 2 is a schematic flowchart of a status switching method 100 according to an embodiment of the present invention. As shown in FIG. 1, the method 100 includes the following steps.

110. Determine whether a terminal device is in a first state.

Specifically, a network device determines whether the terminal device is in the first state, where the first state is used to: when the terminal device is in the first state, send channel state indication CSI information to the network device, and the CSI information includes first CSI information in a closed-loop state and second CSI information in an open-loop state.

In other words, when the terminal device is in the first state, the terminal device needs to feed back the first CSI information in the closed-loop state to the network device, and also needs to feed back the second CSI information in the open-loop state to the network device.

In this embodiment of the present invention, the terminal device in the first state needs to send the first CSI information and the second CSI information to the network device. The first state may be a mixed state between the open-loop state and the closed-loop state, or may be the open-loop state, or may be the closed-loop state. A representation form of the first state is not specifically limited in this embodiment of the present invention.

120. When the terminal device is in the first state, receive CSI information sent by the terminal device.

Specifically, when the terminal device is in the first state, the network device receives the CSI information sent by the terminal device.

Optionally, if the terminal device is not in the first state, before the network device sends first indication information to the terminal device, the network device sends an RRC message to the terminal device, where the RRC message is used to instruct the terminal device to enter the first state.

For example, if the terminal device is in the closed-loop state or the open-loop state, before the network device sends the first indication information to the terminal device, the network device sends the RRC message to the terminal device, so that the terminal device first enters the first state.

Optionally, the first state is the open-loop state. If the terminal device is not in the first state, before the network device sends the first indication information to the terminal device, the network device sends a Media Access Control MAC control information element to the terminal device, where the MAC control information element is used to instruct the terminal device to enter the open-loop state.

For example, if the terminal device is in the closed-loop state, before the network device sends the first indication information to the terminal device, the network device sends the MAC control information element to the terminal device, so that the terminal device first enters the open-loop state.

In this way, after entering the open-loop state or the first state, the terminal device may send the first CSI information and the second CSI information to the network device.

130. Determine first indication information based on the CSI information, where the first indication information is used to indicate a transmission parameter of downlink data.

Specifically, the network device determines the first indication information based on the CSI information, where the first indication information is used to indicate the transmission parameter of the downlink data.

It should be understood that the first indication information is used to indicate the transmission parameter of the downlink data and the transmission parameter may include at least one of a scrambling code sequence number, an antenna port, and a quantity of transport layers.

It should be further understood that the CSI information may include rank indicator (RI) information, precoding matrix indicator () information, channel quality indicator () information, and the like.

The RI information and the PMI information respectively indicate a quantity of used layers and a precoding matrix. In some embodiments, a set of precoding matrices may be referred to as a codebook, and each precoding matrix may also be referred to as a codeword.

Optionally, the network device determines the first indication information based on the precoding matrix indicator (PMI) information in the CSI information.

Specifically, the network device determines the first indication information based on a change trend of the PMI information in the CSI information.

For example, when the change trend of the PMI information is greater than or equal to a first threshold, it is determined that an open-loop transmission method is used for the downlink data. To be specific, the first indication information indicates that a transmission method used by the terminal device for the downlink data is the open-loop transmission method.

Optionally, the network device determines the first indication information based on first channel quality indicator (CQI) information in the closed-loop state in the CSI information and second CQI information in the open-loop state in the CSI information.

Specifically, the network device determines the first indication information based on a difference between the first CQI information and the second CQI information.

For example, when the difference between the first CQI information and the second CQI information is greater than a second threshold, it is determined that the open-loop transmission method is used for the downlink data.

Optionally, in this embodiment of the present invention, the first CSI information includes the PMI information and the first CQI information, and the second CSI information includes the second CQI information.

It should be understood that, in this embodiment of the present invention, the network device may determine the first indication information based on the CSI information, or may determine the first indication information based on other information. This is not specifically limited in this embodiment of the present invention.

For example, the network device determines the first indication information based on an acknowledgement/negative acknowledgement (ACK/NACK) feedback of current downlink data transmission.

140. Send the first indication information to the terminal device.

Specifically, the network device sends the first indication information to the terminal device.

Optionally, the network device sends first downlink control information (DCI) to the terminal device, where the first DCI includes the first indication information.

In other words, the network device adds the first indication information to the first DCI information.

For example, in downlink scheduling information DCI 2C/2D, as shown in the following Table 1, it is assumed that in the RRC message, an "Openloop" parameter is used to indicate that the terminal device is in the first state.

**Table 1**

| Single codeword: Codeword 0 is available Codeword 1 is unavailable | | Dual codeword: Codeword 0 is available Codeword 1 is available | |
|---|---|---|---|
| Indicator value | Represented information | Indicator value | Represented information |
| 0 | Layer 1 closed-loop transmission, port 7, and $n_{SCID}=0$ | 0 | Layer 2 closed-loop transmission, ports 7 and 8, $n_{SCID}=0$ |
| 1 | Layer 1 closed-loop transmission, port 7, and $n_{SCID}=1$ If an RRC parameter *Openloop* has been configured, it is layer 1 open-loop transmission, SFBC transmission on ports 7 and 8 | 1 | Layer 2 closed-loop transmission, ports 7 and 8, and $n_{SCID}=1$. If an RRC parameter *Openloop* has been configured, it is layer 2 open-loop transmission, phase cycling transmission on the ports 7 and 8 |
| 2 | Layer 1 closed-loop transmission, port 8, and $n_{SCID}=0$ | 2 | Layer 3 closed-loop transmission, and ports 7 to 9 |
| 3 | Layer 1 closed-loop transmission, port 8, and $n_{SCID}=1$. If an RRC parameter *Openloop* has been configured, it is layer 2 open-loop transmission, phase cycling transmission on ports 7 and 8 | 3 | Layer 4 closed-loop transmission, and ports 7 to 10 |
| 4 | Layer 2 closed-loop transmission, and ports 7 and 8 | 4 | Layer 5 closed-loop transmission, and ports 7 to 11 |
| 5 | Layer 3 closed-loop transmission, and ports 7 to 9 | 5 | Layer 6 closed-loop transmission, and ports 7 to 12 |
| 6 | Layer 4 closed-loop transmission, and ports 7 to 10 | 6 | Layer 7 closed-loop transmission, and ports 7 to 13 |
| 7 | Reserved | 7 | Layer 8 closed-loop transmission, and ports 7 to 14 |

In Table 1, $n_{SCID}$ is used to indicate a codeword used for the downlink data, and both space frequency block coding (SFBC) transmission and phase cycling transmission are beamforming-based open-loop transmission modes.

A maximum quantity of antenna ports defined in Release 8 (R8) of the 3rd Generation Partnership Project is 4, and it means that a maximum value of a layer quantity does not exceed 4. Therefore, two codewords may be mapped to layers 1, 2, 3, and 4 for transmission. A maximum quantity of antenna ports defined in the R9 standard is 8, and a maximum value of a layer quantity does not exceed 8. Therefore, two codewords may be mapped to layers 1 to 8 for transmission. In addition, a virtual port corresponding to a DMRS is a port 7 to a port 14.

In this embodiment of the present invention, the layer 1 open-loop transmission may also be an open-loop transmission manner based on another coding form. This is not specifically limited in this embodiment of the present invention. For example, space time coding (STC) and cyclic delay diversity (CDD).

In this embodiment of the present invention, when the single codeword is used for sending, in other words, a transmit diversity mode is used, a rank is always 1, and a quantity of layers is equal to a quantity of antenna ports. When the dual codeword, namely, a spatial multiplexing mode, is used for sending, a rank of a channel is equal to a quantity of layers, and the quantity of layers cannot exceed a maximum quantity of antenna ports on a transceiver side. Specific forms of their resource mapping are respectively shown as follows:

Rank 1 transmission: Open-loop precoding on the virtual port corresponding to the DMRS, and mapping on a $(2i)^{th}$ resource element (RE) and a $(2i+1)^{th}$ resource element is:

$$\begin{bmatrix} y^{(7)}(2i) \\ y^{(8)}(2i) \\ y^{(7)}(2i+1) \\ y^{(8)}(2i+1) \end{bmatrix} = \frac{1}{\sqrt{2}} \begin{bmatrix} 1 & 0 & j & 0 \\ 0 & -1 & 0 & j \\ 0 & 1 & 0 & j \\ 1 & 0 & -j & 0 \end{bmatrix} \begin{bmatrix} \mathrm{Re}\left(x^{(0)}(i)\right) \\ \mathrm{Re}\left(x^{(1)}(i)\right) \\ \mathrm{Im}\left(x^{(0)}(i)\right) \\ \mathrm{Im}\left(x^{(1)}(i)\right) \end{bmatrix} \tag{1}$$

where $y^{(7)}(2i)$ and $y^{(8)}(2i)$ respectively represent a $(2i)^{th}$ symbol obtained after precoding on a seventh and an eighth antenna port; $\mathrm{Re}(x^{(0)}(i))$ and $\mathrm{Re}(x^{(1)}(i)$ represent a real part of an $i^{th}$ transport symbol at a zeroth and a first transport layer; $\mathrm{Im}(x^{(0)}(i))$ and $\mathrm{Im}(x^{(1)}(i))$ represent an imaginary part of an $i^{th}$ transport symbol at a zeroth and a first transport layer; $j$ represents an imaginary number symbol.

Rank 2 transmission: Open-loop precoding on the virtual port corresponding to the DMRS, and mapping on an $i^{th}$ resource element is:

$$\begin{bmatrix} y^{(7)}(i) \\ y^{(8)}(i) \end{bmatrix} = \begin{bmatrix} 1 & 1 \\ \theta_n f_i & -\theta_n f_i \end{bmatrix} \begin{bmatrix} x^{(0)}(i) \\ x^{(1)}(i) \end{bmatrix} \tag{2}$$

where $y^{(7)}(i)$ and $y^{(8)}(i)$ represent a $(2i)^{th}$ symbol obtained after precoding on a seventh and an eighth antenna port; $x^{(0)}(i)$ and $x^{(1)}(i)$ represent an $i^{th}$ transport symbol at a zeroth and a first transport layer; $\theta_n$ and $f_i$ are respectively determined according to formula (3) and formula (4).

$$\theta_n = e^{j\pi \bmod(n,2)/2} \tag{3}$$

$$f_i = e^{j\pi \bmod(i,2)} \tag{4}$$

where $j$ represents an imaginary number symbol, and $\bmod(i, 2)$ represents a modulo of taking 2.

Optionally, the network device determines the first indication information based on a definition in Table 1, where the first indication information is used to indicate that the terminal device is in any one of the following states:

a rank 1 open-loop transmission state based on SFBC;
a rank 2 open-loop transmission state based on phase encoding; and
a closed-loop transmission state from a rank 1 to a rank N, where N is a maximum quantity of transport layers.

In this embodiment of the present invention, the network device indicates the transmission parameter of the downlink data by using the first indication information, to avoid higher layer signaling overheads caused by frequent RRC reconfiguration, and reduce a network delay.

In addition, for inter-cell interference that may be caused by the open-loop precoding of the beamforming, the status switching method in this embodiment of the present invention can quickly switch the open-loop/closed-loop state, to reduce unnecessary open-loop spatial multiplexing transmission and effectively reduce the inter-cell interference.

Finally, the network device sends, through a downlink control channel, the first indication information used to indicate the transmission parameter of the downlink data, to reserve signaling space for a definition of subsequent higher order open-loop precoding and achieve forward compatibility.

It should be understood that, in Table 1, all transmission parameter set indications of SCID=1 in a 3-bit reference table about information such as an antenna port, a scrambling code, and a layer quantity indication are replaced with transmission parameter set indications related to the first indication information. However, this embodiment of the present invention is not limited thereto.

For example, in this embodiment of the present invention, alternatively, all transmission parameter set indications of OCC-4 in a 4-bit optional table about information such as an antenna port, a scrambling code, and a layer quantity indication are replaced with transmission parameter set indications related to the first indication information. It is assumed that in the RRC message, an "Openloop" parameter is used to indicate that the terminal device is in the first state.

Details are shown in the following Table 2.

**Table 2**

| Single codeword: Codeword 0 is available Codeword 1 is unavailable | | Dual codeword: Codeword 0 is available Codeword 1 is available | |
|---|---|---|---|
| Indicator value | Represented information | Indicator value | Represented information |
| 0 | Layer 1 closed-loop transmission, port 7, and $n_{SCID}=0$ | 0 | Layer 2 closed-loop transmission, ports 7 and 8, and $n_{SCID}=0$ |
| 1 | Layer 1 closed-loop transmission, port 7, and $n_{SCID}=1$ | 1 | Layer 2 closed-loop transmission, ports 7 and 8, and $n_{SCID}=1$ |
| 2 | Layer 1 closed-loop transmission, port 8, and $n_{SCID}=0$ | 2 | Layer 2 open-loop transmission, phase cycling transmission on ports 7 and 8, and $n_{SCID}=0$ |
| 3 | Layer 1 closed-loop transmission, port 8, and $n_{SCID}=1$ | 3 | Layer 2 open-loop transmission, phase cycling transmission on ports 7 and 8, and $n_{SCID}=1$ |
| 4 | Layer 1 open-loop transmission, SFBC on ports 7 and 8, and $n_{SCID}=0$ | 4 | Reserved |
| 5 | Layer 1 open-loop transmission, SFBC on ports 7 and 8, and $n_{SCID}=1$ | 5 | Reserved |
| 6 | Layer 2 open-loop transmission, phase cycling transmission on ports 7 and 8, and $n_{SCID}=0$ | 6 | Layer 3 closed-loop transmission, and ports 7 to 9 |
| 7 | Layer 2 open-loop transmission, phase cycling transmission on ports 7 and 8, and $n_{SCID}=1$ | 7 | Layer 4 closed-loop transmission, and ports 7 to 10 |
| 8 | Reserved | 8 | Layer 5 closed-loop transmission, and ports 7 to 11 |
| 9 | Reserved | 9 | Layer 6 closed-loop transmission, and ports 7 to 12 |
| 10 | Reserved | 10 | Layer 7 closed-loop transmission, and ports 7 to 13 |
| 11 | Reserved | 11 | Layer 8 closed-loop transmission, and ports 7 to 14 |
| 12 | Layer 2 closed-loop transmission, and ports 7 and 8 | 12 | Reserved |

(continued)

| Indicator value | Represented information | Indicator value | Represented information |
|---|---|---|---|
| 13 | Layer 3 closed-loop transmission, and ports 7 to 9 | 13 | Reserved |
| 14 | Layer 4 closed-loop transmission, and ports 7 to 10 | 14 | Reserved |
| 15 | Reserved | 15 | Reserved |

To be specific, the first DCI in this embodiment of the present invention includes 4-bit indication information, and the indication information indicates whether open-loop transmission or closed-loop transmission is used during current data sending, a quantity of specific transport layers of the open-loop transmission or the closed-loop transmission, a port sequence number, and the like.

Table 2 is also visible to a terminal device for which a candidate table is configured. Therefore, the network device may generate the first indication information based on Table 2 and the CSI information. After receiving the first indication information, the terminal device can directly determine a specific transmission parameter of current downlink transmission, to avoid sending Table 2 and further reduce signaling overheads.

In addition, design of Table 2 is further applicable to open-loop spatial multiplexing of a terminal device in the R13 and the R14, and has relatively slight impact on the standard.

Finally, because the OCC-4 and the open-loop transmission are unlikely to occur in a same scenario, a redefinition in Table 2 avoids a signaling conflict and can improve network reliability.

It should be understood that Table 1 and Table 2 indications describe an example in which when the terminal device is in the first state, a transmission parameter related to the first indication information in the DCI is redefined, and in addition, the transmission parameter in the table is used to indicate whether a downlink data packet is a closed-loop data packet or an open-loop data packet. However, this embodiment of the present invention is not limited thereto.

For example, when the first state is the open-loop state, to be specific, the terminal device has already been in the open-loop state, or has entered the open-loop state by receiving the MAC control information element, the DCI may be used to redefine a 3-bit reference table in DCI 2C/2D used by the TM9/10 in the Release 13 (R13) of a Long Term Evolution system. Specifically, the 3-bit reference table is defined according to Table 3.

**Table 3**

| Single codeword:<br>Codeword 0 is available<br>Codeword 1 is unavailable | | Dual codeword:<br>Codeword 0 is available<br>Codeword 1 is available | |
|---|---|---|---|
| Indicator value | Represented information | Indicator value | Represented information |
| 0 | Layer 1 open-loop transmission, SFBC on ports 7 and 8, and $n_{SCID}=0$ | 0 | Layer 2 open-loop transmission, phase cycling transmission on ports 7 and 8, and $n_{SCID}=0$ |
| 1 | Layer 1 open-loop transmission, SFBC on ports 7 and 8, and $n_{SCID}=1$ | 1 | Layer 2 open-loop transmission, phase cycling transmission on ports 7 and 8, and $n_{SCID}=1$ |
| 2 | Layer 2 open-loop transmission, phase cycling transmission on ports 7 and 8, and $n_{SCID}=0$ | 2 | Reserved |
| 3 | Layer 2 open-loop transmission, phase cycling transmission on ports 7 and 8, and $n_{SCID}=1$ | 3 | Reserved |
| 4 | Reserved | 4 | Reserved |
| 5 | Reserved | 5 | Reserved |
| 6 | Reserved | 6 | Reserved |

(continued)

| Indicator value | Represented information | Indicator value | Represented information |
|---|---|---|---|
| 7 | Reserved | 7 | Reserved |

In this embodiment of the present invention, the network device indicates the transmission parameter of the downlink data by using the first indication information, to avoid higher layer signaling overheads caused by frequent RRC reconfiguration, and reduce a network delay.

In addition, for inter-cell interference that may be caused by the open-loop precoding of the beamforming, the status switching method in this embodiment of the present invention can quickly switch the open-loop/closed-loop state, to reduce unnecessary open-loop spatial multiplexing transmission and effectively reduce the inter-cell interference.

Finally, the network device sends, through a downlink control channel, the first indication information used to indicate the transmission parameter of the downlink data, to reserve signaling space for a definition of subsequent higher order open-loop precoding and achieve forward compatibility.

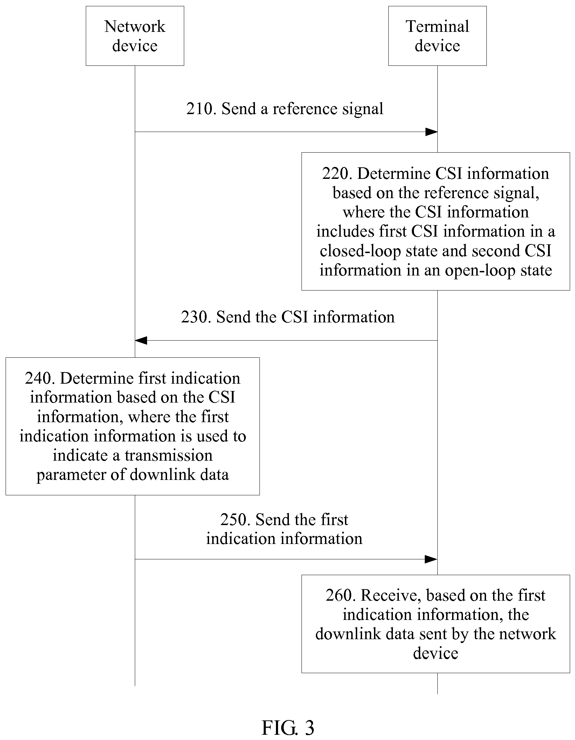

FIG. 3 is another schematic flowchart of a status switching method according to an embodiment of the present invention.

With reference to FIG. 3, the following describes in detail a specific implementation of a status switching method 200 in this embodiment of the present invention when a terminal device is in a first state, to be specific, when the terminal device sends first CSI information to a network device and also sends second CSI information to the network device.

As shown in FIG. 3, the method 200 includes the following steps.

210. Send a reference signal.

Specifically, the network device sends the reference signal to the terminal device, so that the terminal device performs channel estimation based on the reference signal.

220. Determine CSI information based on the reference signal, where the CSI information includes first CSI information in a closed-loop state and second CSI information in an open-loop state.

Specifically, the terminal device determines the first CSI information and the second CSI information in the open-loop state based on the reference signal. The first CSI information is CSI information determined based on the reference signal when it is assumed that the terminal device is in the closed-loop state, and the second CSI information is CSI information determined based on the reference signal when it is assumed that the terminal device is in the open-loop state.

230. Send the CSI information.

Specifically, the terminal device sends the CSI information to the network device.

It should be understood that, in this embodiment of the present invention, the terminal device sends the first CSI information and the second CSI information to the network device. The first CSI information and the second CSI information may be periodically fed back, or may be aperiodically fed back, or may be fed back at the same time, or may be fed back at different times. This is not specifically limited in this embodiment of the present invention.

For example, the first CSI information and the second CSI information may be periodically fed back.

Optionally, the first CSI information and the second CSI information may use a same feedback period and/or a same start sub frame.

Optionally, the first CSI information and the second CSI information may use different feedback periods and start subframes.

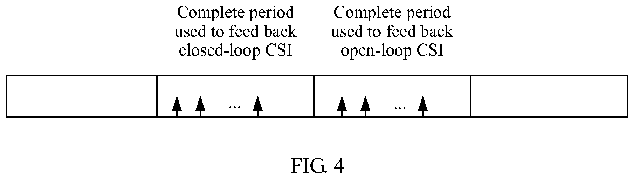

FIG. 4 shows an example of feedback periods of the first CSI information and the second CSI information according to an embodiment of the present invention.

As shown in FIG. 4, the first CSI information and the second CSI information use different feedback periods and start subframes.

For another example, the first CSI information and the second CSI information may be aperiodically fed back.

For another example, the first CSI information and the second CSI information may be fed back at the same time.

In this embodiment of the present invention, the terminal device may configure a feedback process, used to feed back the first CSI information and the second CSI information, or may configure two feedback processes, respectively used to feed back the first CSI information and the second CSI information. This is not specifically limited in this embodiment of the present invention.

It should be understood that, if the terminal device feeds back the first CSI information and the second CSI information at different times, when receiving the CSI information, the network device needs to determine whether the CSI information is the first CSI information or the second CSI information.

Optionally, in this embodiment of the present invention, before receiving the CSI information, the network device may send second indication information to the terminal device, where the second indication information is used to instruct the terminal device to send the first CSI information or the second CSI information at a first moment, or may receive third indication information sent by the terminal device, where the third indication information is used to indicate to the network device that the CSI information sent at a first moment is the first CSI information or the second CSI information.

For example, before sending the CSI information to the network device, the terminal device receives the second indication information sent by the network device, where the second indication information is used to instruct the terminal device to send the first CSI information or the second CSI information at the first moment.

Optionally, the terminal device receives a second DCI message sent by the network device, where the second DCI message includes the second indication information.

For another example, before sending the CSI information to the network device, the terminal device sends the third indication information to the network device, where the third indication information is used to indicate to the network device that the CSI information sent at the first moment is the first CSI information or the second CSI information.

In other words, before sending the CSI information to the network device, the terminal device receives the second indication information sent by the network device, or sends the third indication information to the network device, so that after receiving the CSI information, the network device can know whether the CSI information is the first CSI information or the second CSI information.

It should be understood that the first moment in this embodiment of the present invention may be a current subframe or a current timeslot, or may be a subframe or a timeslot used when data is transmitted next time. This is not specifically limited in this embodiment of the present invention.

Optionally, the CSI information in this embodiment of the present invention includes PMI information, and the PMI information includes a first precoding matrix sequence number corresponding to a wideband, or the PMI information includes the first precoding matrix sequence number and a second precoding matrix sequence number corresponding to a sub-band in the wideband.

Specifically, the terminal device may be configured to be in a wideband PMI reporting mode or a wideband + sub-band PMI reporting mode. This is not specifically limited in this embodiment of the present invention.

For example, when a reporting mode of the terminal device is set to the wideband PMI reporting mode, only a sequence number of a W1 precoding matrix defined in the R13 is reported, in other words, only one matrix that represents a beamforming vector set is reported.

For another example, when a reporting mode of the terminal device is set to the wideband + sub-band PMI reporting mode, W1 defined in the R13 needs to be reported in the wideband, that is, a matrix that represents a beamforming vector set, and in addition, a precoding matrix sequence number also needs to be reported in the sub-band, that is, a beamforming vector representing that polarization direction information is not included. In sub-band reporting, optionally, a precoding matrix is obtained by sampling a W2 set defined in the R13, to remove cross-polarization phase information from an original precoding matrix set.

240. Determine first indication information based on the CSI information, where the first indication information is used to indicate a transmission parameter of downlink data.

Specifically, the network device determines, based on the CSI information sent by the terminal device, whether closed-loop transmission or open-loop transmission is used for current downlink data transmission, and information such as a scrambling code sequence number, a port sequence number, and a quantity of layers that are used for the current downlink data transmission.

It should be understood that an implementation in which the network device determines the first indication information based on the CSI information is described in detail in a method 100. To avoid repetition, details are not described herein again.

250. Send the first indication information.

Specifically, the network device sends the first indication information to the terminal device, and the first indication information is used to indicate a transmission parameter of current transmission. To avoid repetition, details are not described herein again.

260. Receive, based on the first indication information, the downlink data sent by the network device.

Specifically, the terminal device receives the downlink data based on the first indication information and based on the transmission parameter indicated by the first indication information.

FIG. 4 is still another schematic flowchart of a status switching method according to an embodiment of the present invention.

As shown in FIG. 4, for an open-loop/closed-loop state switching method based on a cell-level reference signal, an open-loop/closed-loop mixed state, namely, a first state, is first defined. Optionally, this transmission mode is configured through RRC.

Specifically, after a terminal device is in the first state, accordingly, the terminal device performs channel estimation based on a demodulation reference signal sent by a network device, determines CSI information in an open-loop state and CSI information in a closed-loop state, and feeds back the CSI information to the network device.

The network device determines scheduling signaling based on the CSI information reported by the terminal device, and sends the scheduling signaling to the terminal device, so that the terminal device determines a transmission status of a downlink data packet based on the scheduling signaling, and receives the downlink data packet.

For example, when determining, based on the CSI information, to use open-loop transmission, the network device generates the scheduling signaling, performs open-loop precoding on the downlink data packet, and sends, to the terminal device, the scheduling signaling and an open-loop data packet obtained after the open-loop precoding. The terminal device receives the scheduling signaling, and performs open-loop decoding on the open-loop data packet through the scheduling signaling.

If the terminal device needs to exit from an open-loop spatial multiplexing mode, only the scheduling signaling needs to be sent to indicate a transmission status of downlink data of the terminal device, to avoid reconfiguration through higher layer signaling, and effectively reduce a network delay.

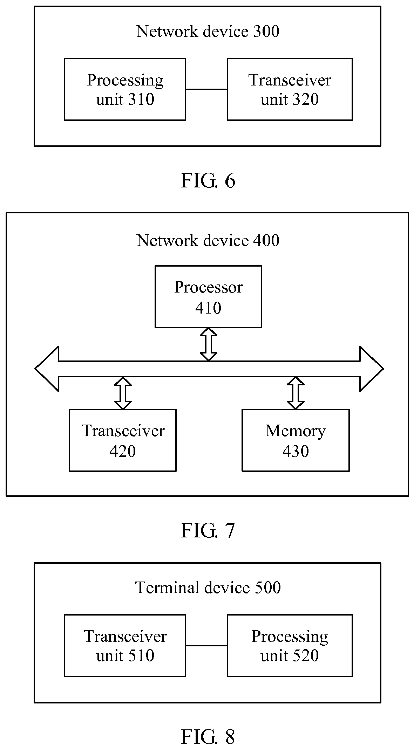

The following describes a status switching network device and terminal device according to embodiments of the present invention with reference to FIG. 6 to FIG. 9.

FIG. 6 is a schematic block diagram of a status switching network device according to an embodiment of the present invention. As shown in FIG. 6, the network device in this embodiment of the present invention includes:

a processing unit 310, configured to determine whether a terminal device is in a first state, where the first state is used to: when the terminal device is in the first state, send channel state indication CSI information to the network device, and the CSI information includes first CSI information in a closed-loop state and second CSI information in an open-loop state; and

a transceiver unit 320, configured to: when the terminal device is in the first state, receive the CSI information sent by the terminal device.

The processing unit 310 is further configured to determine first indication information based on the CSI information, where the first indication information is used to indicate a transmission parameter of downlink data.

The transceiver unit 320 is further configured to send the first indication information to the terminal device.

Optionally, if the terminal device is not in the first state, before the transceiver unit 320 sends the first indication information to the terminal device, the transceiver unit 320 is further configured to:

send a radio resource management RRC message to the terminal device, where the RRC message is used to instruct the terminal device to enter the first state.

Optionally, the first state is the open-loop state, and if the terminal device is not in the first state, before the transceiver unit 320 sends the first indication information to the terminal device, the transceiver unit 320 is further configured to:

send a Media Access Control MAC control information element to the terminal device, where the MAC control information element is used to instruct the terminal device to enter the open-loop state.

Optionally, the first CSI information includes precoding matrix indicator PMI information and first channel quality indicator CQI information in the closed-loop state, and the second CSI information includes second CQI information in the open-loop state.

The processing unit 310 is specifically configured to:

determine the first indication information based on the PMI information; and/or
determine the first indication information based on the first CQI information and the second CQI information.

Optionally, the transceiver unit 320 is specifically configured to:

send first downlink control information DCI to the terminal device, where the first DCI includes the first indication information.

Optionally, before the transceiver unit 320 receives the CSI information sent by the terminal device, the transceiver unit 320 is further configured to:

send second indication information to the terminal device, where the second indication information is used to instruct the terminal device to send the first CSI information or the second CSI information at a first moment.

Optionally, before the network device receives the CSI information sent by the terminal device, the transceiver unit 320 is further configured to:

receive third indication information sent by the terminal device, where the third indication information is used to indicate to the network device that the CSI information sent at a first moment is the first CSI information or the second CSI information.

Optionally, the transceiver unit 320 is specifically configured to:

send a second DCI message to the terminal device, where the second DCI message includes the second indication information.

It should be understood that the network device 300 according to this embodiment of the present invention may correspond to a network device in a method embodiment of the embodiments of the present invention, and operations and/or functions of various modules and other modules of the network device 300 are respectively used to implement corresponding procedures of the method 100 and the method 200. For brevity, details are not described herein again.

It should be noted that, in this embodiment of the present invention, the processing unit 310 may be implemented by a processor, and the transceiver unit 320 may be implemented by a transceiver. As shown in FIG. 7, a network device 400 may include a processor 410, a transceiver 420, and a memory 430. The memory 430 may be configured to store indication information, and may be further configured to store code, an instruction, and the like that are executed by the processor 410.

All components of the network device 400 are connected through a bus system. In addition to a data bus, the bus system further includes a power bus, a control bus, and a status signal bus.

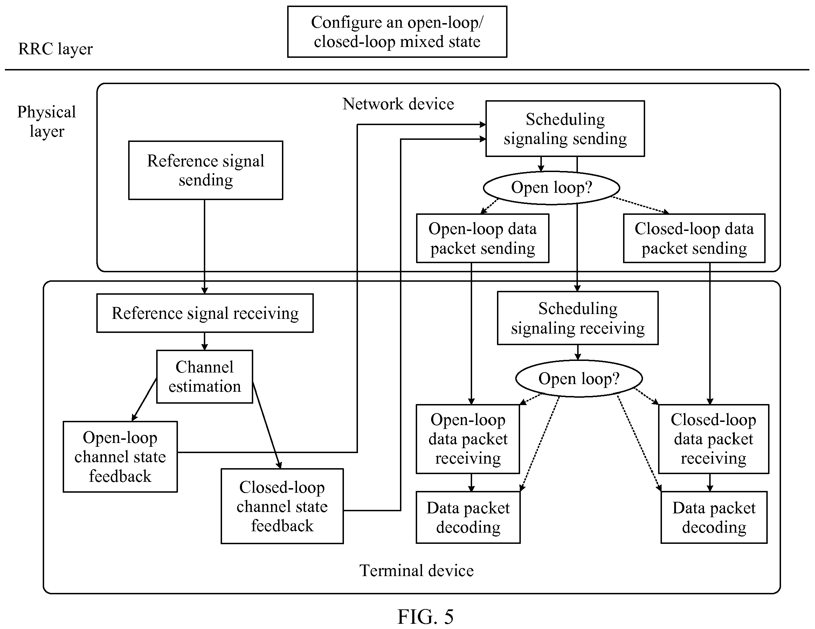

The network device 400 shown in FIG. 7 or the network device 300 shown in FIG. 6 can implement the processes implemented by the network device in the method embodiments in FIG. 2 to FIG. 5. To avoid repetition, details are not described herein again.

FIG. 8 is a schematic block diagram of a status switching terminal device 500 according to an embodiment of the present invention. As shown in FIG. 8, the terminal device 500 in this embodiment of the present invention includes:

a transceiver unit 510, configured to receive first indication information sent by a network device, where the first indication information is used to indicate a transmission parameter of downlink data; and
a processing unit 520, configured to receive, based on the first indication information, the downlink data sent by the network device.

Optionally, before the transceiver unit 510 receives the first indication information sent by the network device, the transceiver unit 510 is further configured to:

receive a radio resource management RRC message sent by the network device, where the RRC message is used to instruct the terminal device to enter a first state,
the first state is used to instruct the terminal device to send channel state indication CSI information to the network device, and the CSI information includes first CSI information in a closed-loop state and second CSI information in an open-loop state.

Optionally, before the transceiver unit 510 receives the first indication information sent by the network device, the transceiver unit 510 is further configured to:
receive a Media Access Control MAC control information element sent by the network device, where the MAC control information element is used to indicate that the network device enters the open-loop state.

Optionally, the transceiver unit 510 is specifically configured to:
receive first downlink control information DCI sent by the network device, where the first DCI includes the first indication information.

Optionally, before the transceiver unit 510 receives the first indication information sent by the network device, the transceiver unit 510 is further configured to:

send the first CSI information and the second CSI information to the network device, where
the first CSI information includes precoding matrix indicator PMI information and first channel quality indicator CQI information in the closed-loop state, and the second CSI information includes second CQI information in the open-loop state.

Optionally, before the transceiver unit 510 sends the first CSI information and the second CSI information to the network device, the transceiver unit 510 is further configured to:
receive second indication information sent by the network device, where the second indication information is used to instruct the terminal device to send the first CSI information or the second CSI information at a first moment.

Optionally, before the transceiver unit 510 sends the first CSI information and the second CSI information to the network device, the transceiver unit 510 is further configured to:
send third indication information to the network device, where the third indication information is used to indicate to the network device that the CSI information sent at a first moment is the first CSI information or the second CSI information.

Optionally, the transceiver unit 510 is specifically configured to:
receive a second DCI message sent by the network device, where the second DCI message includes the second indication information.

It should be understood that the terminal device 500 according to this embodiment of the present invention may correspond to a terminal device in a method embodiment of the embodiments of the present invention, and operations and/or functions of various modules and other modules of the terminal device 500 are respectively used to implement corresponding procedures of the method 100 and the method 200. For brevity, details are not described herein again.

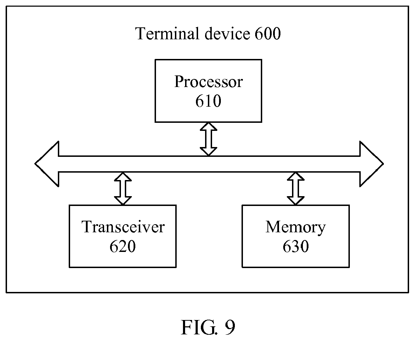

It should be noted that, in this embodiment of the present invention, the transceiver unit 510 may be implemented by a transceiver, and the processing unit 520 may be implemented by a processor. As shown in FIG. 9, a terminal device 600 may include a processor 610, a transceiver 620, and a memory 630. The memory 630 may be configured to store indication information, and may be further configured to store code, an instruction, and the like that are executed by the processor 610.

All components of the terminal device 600 are connected through a bus system. In addition to a data bus, the bus system further includes a power bus, a control bus, and a status signal bus.

In an implementation process, steps in the foregoing methods can be implemented by using a hardware integrated logic circuit in the processor, or by using instructions in a form of software. The steps of the method disclosed with reference to the embodiments of the present invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, a register, or the like. The storage medium is located in the memory, and a processor executes instructions in the memory and completes the steps in the foregoing methods in combination with hardware of the processor. To avoid repetition, details are not described herein again.

The terms used in the embodiments and the appended claims of the present invention are merely for the purpose of describing specific embodiments, and are not intended to limit the embodiments of the present invention.

For example, the term "and/or" in the embodiments of the present invention describes only an association relationship for describing associated objects and indicates that three relationships may exist. Specifically, A and/or B may indicate the following three cases: Only A exists, both A and B exist, and only B exists. In addition, the character "/" in this specification generally indicates an "or" relationship between the associated objects.

The terms "a", "said" and "the" of singular forms used in the embodiments and the appended claims of the present invention are also intended to include plural forms, unless otherwise specified in the context clearly.

For another example, although terms "first", "second", "third", and the like may be used in the embodiments of the present invention to describe various messages, requests, and terminals, the messages, requests, and terminals are not limited by the terms. These terms are only used to differentiate between the messages, requests, and terminals. For example, without departing from the scope of the embodiments of the present invention, a first terminal may also be referred to as a second terminal, and similarly, the second terminal may also be referred to as the first terminal.

Depending on the context, for example, words "if" used herein may be explained as "while" or "when" or "in response to determining" or "in response to detection". Similarly, depending on the context, phrases "if determining" or "if detecting (a stated condition or event)" may be explained as "when determining" or "in response to determining" or "when detecting (the stated condition or event)" or "in response to detecting (the stated condition or event)".

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the embodiments of the present invention.

It may be clearly understood by a person skilled in the art that, for the purpose of convenient and brief description, for a detailed working process ot the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the embodiments of the present invention.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

The invention is defined by the appended claims 1-3.

**Claims**

1. A method performed by a network device, wherein the method comprises:

   • determining whether a terminal device is in a first state, wherein the first state is a closed-loop state or an open-loop state;
   • when the terminal device is in the first state, receiving channel state indicator, CSI, information from the terminal device, and the CSI information comprises CSI information of the closed-loop state and CSI information of the open-loop state,
   wherein the CSI information of the closed-loop state comprises a channel quality indicator, CQI, of the closed-loop state and the CSI information of the open-loop state comprises a CQI of the open-loop state;
   • determining a difference between the CQI of the closed-loop state and the CQI of the open-loop state;
   • if the difference is greater than a threshold, determining, as a transmission parameter of downlink data, that an open-loop transmission method is to be used for the downlink data;
   • sending first indication information to the terminal device, the first indication information indicating that a transmission method for the downlink data is the open-loop transmission method.

2. The method according to claim 1, wherein
   if the terminal device is not in the first state, before the sending the first indication information to the terminal device, the method further comprises:
   sending a radio resource management, RRC, message to the terminal device, wherein the RRC message is used to instruct the terminal device to enter the first state.

3. A network device configured to perform any of the methods according to claims 1 - 2.

**Patentansprüche**

1. Verfahren, das durch eine Netzvorrichtung durchgeführt wird, wobei das Verfahren Folgendes umfasst:

   - Bestimmen, ob sich eine Endgerätevorrichtung in einem ersten Zustand befindet, wobei der erste Zustand ein Zustand mit geschlossener Schleife oder ein Zustand mit offener Schleife ist;
   - wenn sich die Endgerätevorrichtung in dem ersten Zustand befindet, Empfangen von Kanalzustandsindikator- bzw. CSI(Channel State Indicator)-Informationen von der Endgerätevorrichtung, und wobei die CSI-Informationen CSI-Informationen des Zustands mit geschlossener Schleife und CSI-Informationen des Zustands mit offener Schleife umfassen,
   wobei die CSI-Informationen des Zustands mit geschlossener Schleife einen Kanalqualitätsindikator, CQI (Channel Quality Indicator), des Zustands mit geschlossener Schleife umfassen und die CSI-Informationen des Zustands mit offener Schleife einen CQI des Zustands mit offener Schleife umfassen;
   - Bestimmen einer Differenz zwischen dem CQI des Zustands mit geschlossener Schleife und dem CQI des Zustands mit offener Schleife;
   - falls die Differenz größer als eine Schwelle ist, Bestimmen, als ein Übertragungsparameter von Downlink-Daten, dass ein Übertragungsverfahren mit offener Schleife für die Downlink-Daten zu verwenden ist;
   - Senden erster Indikationsinformationen an die Endgerätevorrichtung, wobei die ersten Indikationsinformationen angeben, dass ein Übertragungsverfahren für die Downlink-Daten das Übertragungsverfahren mit offener Schleife ist.

**2.** Verfahren nach Anspruch 1, wobei

das Verfahren, falls sich die Endgerätevorrichtung vor dem Senden der ersten Indikationsinformationen an die Endgerätevorrichtung nicht in dem ersten Zustand befindet, ferner Folgendes umfasst:

Senden einer Funkressourcenverwaltungs- bzw. RRC(Radio Ressource Management)-Nachricht an die Endgerätevorrichtung, wobei die RRC-Nachricht verwendet wird, um die Endgerätevorrichtung zum Eintreten in den ersten Zustand anzuweisen.

**3.** Netzvorrichtung, die zum Durchführen eines der Verfahren nach Ansprüchen 1-2 konfiguriert ist.

**Revendications**

**1.** Procédé réalisé par un dispositif de réseau, le procédé comprenant :

• la détermination si un dispositif terminal est dans un premier état, le premier état étant un état en boucle fermée ou un état en boucle ouverte ;
• lorsque le dispositif terminal est dans le premier état, la réception d'informations d'indicateur d'état de canal, CSI, à partir du dispositif terminal, et les informations CSI comprenant des informations CSI de l'état en boucle fermée et des informations CSI de l'état en boucle ouverte,
les informations CSI de l'état en boucle fermée comprenant un indicateur de qualité de canal, CQI, de l'état en boucle fermée, et les informations CSI de l'état en boucle ouverte comprenant un CQI de l'état en boucle ouverte ;
• la détermination d'une différence entre le CQI de l'état en boucle fermée et le CQI de l'état en boucle ouverte ;
• si la différence est supérieure à un seuil, la détermination, comme paramètre de transmission de données de liaison descendante, qu'un procédé de transmission en boucle ouverte doit être utilisé pour les données de liaison descendante ;
• l'envoi de premières informations d'indication au dispositif terminal, les premières informations d'indication indiquant qu'un procédé de transmission pour les données de liaison descendante est le procédé de transmission en boucle ouverte.

**2.** Procédé selon la revendication 1,

si le dispositif terminal n'est pas dans le premier état, avant l'envoi des premières informations d'indication au dispositif terminal, le procédé comprenant en outre :

l'envoi d'un message de gestion de ressources radio, RRC, au dispositif terminal, le message RRC étant utilisé pour ordonner au dispositif terminal d'entrer dans le premier état.

**3.** Dispositif de réseau configuré pour réaliser l'un quelconque des procédés selon les revendications 1 et 2.

RRC layer

Configure an open-loop
spatial multiplexing state

Configure a closed-loop
spatial multiplexing state

Physical
layer

Network device

Reference
signal
sending

Scheduling
signaling
sending

Data
packet
sending

Reference
signal
receiving

Channel
estimation

Channel
state
feedback

Scheduling
signaling
receiving

Data
packet
receiving

Data
packet
decoding

Terminal device

Network device

Reference
signal
sending

Scheduling
signaling
sending

Data
packet
sending

Reference
signal
receiving

Channel
estimation

Channel
state
feedback

Scheduling
signaling
receiving

Data
packet
receiving

Data
packet
decoding

Terminal device

FIG. 1

FIG. 2

```
┌──────────┐                              ┌──────────┐
│ Network  │                              │ Terminal │
│  device  │                              │  device  │
└────┬─────┘                              └────┬─────┘
     │        210. Send a reference signal     │
     │─────────────────────────────────────────▶
     │                              ┌───────────────────────────────┐
     │                              │ 220. Determine CSI information │
     │                              │  based on the reference signal,│
     │                              │   where the CSI information    │
     │                              │ includes first CSI information │
     │                              │ in a closed-loop state and     │
     │                              │ second CSI information in an    │
     │                              │   open-loop state              │
     │                              └───────────────────────────────┘
     │        230. Send the CSI information    │
     ◀─────────────────────────────────────────│
┌──────────────────────────────┐               │
│ 240. Determine first          │              │
│ indication information based   │             │
│ on the CSI information, where   │            │
│ the first indication            │            │
│ information is used to indicate │            │
│ a transmission parameter of     │            │
│ downlink data                   │            │
└──────────────────────────────┘               │
     │          250. Send the first            │
     │        indication information           │
     │─────────────────────────────────────────▶
     │                              ┌───────────────────────────────┐
     │                              │ 260. Receive, based on the     │
     │                              │ first indication information,  │
     │                              │ the downlink data sent by the  │
     │                              │ network device                 │
     │                              └───────────────────────────────┘
     │                                         │
```

FIG. 3

FIG. 4

RRC layer

Configure an open-loop/
closed-loop mixed state

Physical
layer

Network device

Reference signal
sending

Scheduling
signaling sending

Open loop?

Open-loop data
packet sending

Closed-loop data
packet sending

Reference signal receiving

Scheduling
signaling receiving

Channel
estimation

Open loop?

Open-loop
channel state
feedback

Open-loop
data packet
receiving

Closed-loop
data packet
receiving

Closed-loop
channel state
feedback

Data packet
decoding

Data packet
decoding

Terminal device

FIG. 5

EP 3 525 380 B1

Network device 300

Processing unit 310 — Transceiver unit 320

FIG. 6

Network device 400

Processor 410

Transceiver 420

Memory 430

FIG. 7

Terminal device 500

Transceiver unit 510 — Processing unit 520

FIG. 8

FIG. 9

**REFERENCES CITED IN THE DESCRIPTION**

**Patent documents cited in the description**

- WO 2013023290 A1
- US 20160261328 A1